# EUROPÄISCHE PATENTANMELDUNG

(11) **EP 1 844 920 A2**
(43) Veröffentlichungstag der Anmeldung: **17.10.2007**
(21) Anmeldenummer: 07007487.7
(22) Anmeldetag: 12.04.2007
(51) Int. Cl.: B29C 65/02, B65B 61/26, B29C 65/74, B65B 9/06, B65B 51/14, B65B 51/30

(54) **Schweissmittel, Verschweisseinrichtung und Verfahren zur Herstellung einer Folienverpackung**

(30) Priorität: 12.04.2006 DE 102006018083
(71) Anmelder: Kallfass Verpackungsmaschinen GmbH, 72622 Nürtingen-Zizishausen (DE)
(72) Erfinder: Kallfass, Jens, 72622 Nürtingen (DE); Kraut, Tino, 72669 Unterensingen (DE)
(74) Vertreter: Ruff, Michael

(57) **Zusammenfassung**

Ein Schweißmittel (10, 21) für eine Verschweißeinrichtung (2, 3) einer Verpackungsmaschine (1) weist einen Grundkörper in Form eines Rades auf, das an einer Stirnfläche (24, 26) für eine Erzeugung einer Schweißnaht (13, 14) oder Schweißprägung an einer Kunststofffolie gestaltet ist. An der Stirnfläche (24, 26) ist abschnittsweise ein Dekor (18, 25) vorgesehen, das für eine dreidimensionale Strukturierung der Schweißnaht (13, 14) in der Art einer Prägung gestaltet ist. Das Schweißmittel wird mit einer Verschweißeinrichtung verwendet zur Herstellung einer Folienverpackung.

## Beschreibung

### Anwendungsgebiet und Stand der Technik

Die Erfindung betrifft ein Schweißmittel, eine mit dem Schweißmittel ausgestattete Verschweißeinrichtung sowie ein Verfahren zur Herstellung einer Folienverpackung unter Verwendung zumindest eines derartigen Schweißmittels.

Aus der DE 199 05 888 A1 ist eine Verschweißeinrichtung für verschweißbare Folien bekannt, die als Teil einer Verpackungsmaschine vorgesehen ist und die es ermöglicht, Gegenstände in eine durchlaufende Folie, die in Form eines Längsschlauchs vorliegt, zu verpacken. Wenigstens zwei Folienlagen des Folienschlauchs werden an einer Längsseite durch die Verschweißeinrichtung miteinander verschweißt. Die Verschweißeinrichtung weist ein rotierendes, beheizbares Trennschweißrad zum Verschweißen der Folienlagen und zum Abtrennen eines Überstandes der Folie sowie wenigstens ein an dem Trennschweißrad anliegendes, mitlaufendes Gegenrad auf. Mit einer derartigen Verschweißeinrichtung können Schlauchbeutel hergestellt werden, in denen darin aufgenommene Gegenstände lose oder fest anliegend umhüllt werden, wie dies für nachgeschrumpfte Verpackungen der Fall ist. Insbesondere bei Verpackungen, die für eine lose Umhüllung der zu verpackenden Gegenstände vorgesehen sind, kann durch Auftrennen und erneutes Verschließen zumindest einer Schweißnaht am Folienschlauch eine unbefugte Veränderung des Inhalts vorgenommen werden. Dies ist bereits mit einfachen Mitteln möglich und insbesondere bei Lebensmitteln oder bei einer fest vorgegebenen Menge von Gegenständen im Folienbeutel unerwünscht.

### Aufgabe und Lösung

Der Erfindung liegt die Aufgabe zugrunde, eingangs genannte Vorrichtungen sowie ein eingangs genanntes Verfahren zu schaffen, mit denen ein Originalitätsschutz für die in der Verpackung enthaltenen Gegenstände durch die Verpackung verwirklicht werden kann.

Gelöst wird diese Aufgabe durch ein Schweißmittel mit den Merkmalen des Anspruchs 1, eine Verschweißeinrichtung mit den Merkmalen des Anspruchs 8 sowie ein Verfahren mit den Merkmalen des Anspruchs 9. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Erfindungsgemäß ist gemäß einem ersten Aspekt der Erfindung ein Schweißmittel für eine Verschweißeinrichtung einer Verpackungsmaschine vorgesehen, das einen Grundkörper aufweist, der an einer Stirnfläche für eine Erzeugung einer Schweißnaht oder Schweißprägung an einer Kunststofffolie ausgebildet ist. An der Stirnfläche, insbesondere abschnittsweise, ist ein Dekor vorgesehen, das für eine dreidimensionale Strukturierung der Schweißnaht in der Art einer Prägung ausgebildet ist. Mit der dreidimensionalen Strukturierung der Schweißnaht wird sichergestellt, dass ein Auftrennen und Wiederverschließen der Schweißnaht ohne sichtbare Veränderungen zumindest deutlich aufwendiger, vorzugsweise nahezu unmöglich ist. Die Strukturierung der Schweißnaht wird beim Auftrennen der Schweißnaht beschädigt und die Folienlagen können somit nur durch ein ähnliches oder identisches Schweißmittel wieder ähnlich oder originalgetreu verschlossen werden. In Abhängigkeit von der Art des am Schweißmittel vorgesehenen Dekors und den Eigenschaften der miteinander zu verschweißenden Folienlagen kann die Strukturierung der Schweißnaht zumindest abschnittsweise in der Art einer vertieften Einprägung oder in der Art einer reliefartigen Ausprägung an den miteinander zu verbindenden Folienlagen ausgeführt sein. Bei dem vorgesehenen Schweißvorgang mit dem entsprechenden Schweißmittel wird eine Schweißebene bestimmt, in der die Folienlagen miteinander verbunden werden. Eine Einprägung ist als Vertiefung in der Schweißebene eingebracht und wird durch die lokale Verdrängung der erwärmten Folie im Bereich der Vertiefung mittels einer erhabenen Positivkontur am Schweißmittel bewirkt. Eine Ausprägung steht über die Schweißebene hinaus und wird dadurch bewirkt, dass die Folienlagen in diesem Bereich mit einem abschnittsweise mit Vertiefungen, also einer Negativkontur, versehenen Schweißmittel nicht oder nur mit geringem Druck verschweißt werden.

Eine benachbarte Anordnung von Bereichen mit einem zumindest abschnittsweise von der Stirnfläche überstehend erhabenen Dekor für eine vertiefte Einprägung der Schweißnaht und mit einem zumindest abschnittsweise vertieft in die Stirnfläche des Schweißmittels eingebrachten Dekor für ein erhabenes Relief, also eine Ausprägung der Schweißnaht, kann vorgesehen werden, um den Schwierigkeitsgrad für eine unbefugte Reproduktion der Originalschweißnaht zu erhöhen. Das Dekor kann in Abhängigkeit von den Abbildungseigenschaften zwischen Schweißmittel und Folienlagen, das heißt unter Berücksichtigung von Parametern wie der Schweißgeschwindigkeit, der Schweißtemperatur und der Verformbarkeit der Folienlagen sowie der minimalen Größe der ein- oder auszuprägenden Strukturen auf den Folienbahnen gewählt werden.

Die Anbringung des Dekors am Schweißmittel kann insbesondere durch Gravieren, Ätzen, galvanische Auf- und/oder Abtragverfahren, Laserstrukturieren oder mit anderen Verfahren zum Ab- und/oder Auftragen von Bereichen einer Oberfläche hergestellt werden. Vorzugsweise ist das Schweißmittel aus einem metallischen Material, insbesondere Stahl, hergestellt und kann zur Begrenzung einer Anhaftung an die erwärmten Folienlagen mit einem haftungsvermindernden Überzug, insbesondere mit einer Polytetrafluorethylenbeschichtung (PTFE), versehen werden. Vorteilhafte sowie bevorzugte Ausgestaltungen der Erfindung sind Gegenstand der weiteren Ansprüche und werden im folgenden näher erläutert. Die Vorrichtungen und das Verfahren werden teilweise gemeinsam erläutert, wobei diese Erläuterungen sowie die entsprechenden Merkmale dennoch unabhängig für die Vorrichtungen und das Verfahren gelten. Der Wortlaut der Ansprüche wird durch die ausdrückliche Bezugnahme zum Inhalt der Beschreibung gemacht.

In weiterer Ausgestaltung der Erfindung ist vorgesehen, dass benachbart zum Dekor zumindest eine erhaben ausgeführte Schneidkante vorgesehen ist, die vorzugsweise über das Dekor übersteht. Mit einer Schneidkante kann ein seitlich neben der Schweißnaht abgegrenzter Überstandsbereich der Folienlagen abgetrennt werden, thermisch oder vorteilhaft mechanisch. Die Folienlagen werden somit im Bereich der Schweißnaht beschnitten, um eine vorteilhafte Anmutung der hergestellten Verpackung zu gewährleisten und ein Risiko eines unerwünschten Auftrennens der verschweißten Folienlagen zu vermindern. Der Vorgang der Abtrennung oder des Abschneidens der Folienlagen seitlich der Schweißnaht erfolgt zeitgleich mit der Verschweißung der Folienlagen.
In weiterer Ausgestaltung der Erfindung ist vorgesehen, dass beidseitig benachbart zur Schneidkante ein Dekor angeordnet ist. Damit können in einem Arbeitsgang zwei parallel zueinander ausgerichtete Schweißnähte an den Folienlagen hergestellt werden, die mittels der Schneidkante voneinander getrennt werden. Ein derartiger Schweißvorgang kann insbesondere bei einer Verwendung eines bereits verschweißten oder ohnehin schlauchartig extrudierten Folienschlauchs zur Unterteilung von einzelnen Folienbeuteln vorgesehen werden. Ein solches Schweißmittel eignet sich also besonders für eine Schweißnaht quer zu einer Mittellängsachse eines Folienschlauchs, bei dem in einem Arbeitsgang zwei parallele Verschweißungen und ein die Verschweißungen trennender Schneidvorgang stattfinden soll.

In weiterer Ausgestaltung der Erfindung ist vorgesehen, dass der Grundkörper balkenförmig gestaltet ist. Damit kann ein diskontinuierlicher Schweißvorgang durchgeführt werden, beispielsweise um an einem Folienschlauch eine Quernaht zu erzeugen und somit einzelne Folienbeutel voneinander abzutrennen.

In weiterer Ausgestaltung der Erfindung ist vorgesehen, dass der Grundkörper im Wesentlichen scheibenförmig gestaltet ist. Damit kann in einem kontinuierlichen oder diskontinuierlichen Schweißprozess zumindest eine Schweißnaht hergestellt werden, die vorzugsweise im Wesentlichen parallel zu einer Mittellängsachse eines beim Schweißvorgang erzeugten Folienschlauchs ausgerichtet ist. Dabei wird die Stirnseite des scheibenförmig gestalteten Grundkörpers mit dem Dekor versehen und kann auf den miteinander zu verbindenden Folienlagen abrollen, um den für die Verschweißung notwendigen Anpressdruck und gegebenenfalls die zur Schweißung erforderliche Wärmeenergie zu übertragen. Ein diskontinuierlicher Schweißvorgang kann durch zeitweiliges Entfernen des Schweißmittels von den Folienlagen bewirkt werden, bei einem kontinuierlichen Schweißvorgang rollt das Schweißmittel dauerhaft auf den Folienlagen ab.

Gemäß einem weiteren Aspekt der Erfindung ist eine Verschweißeinrichtung für eine Verpackungsmaschine mit zumindest einer Fördereinrichtung für eine Kunststofffolie sowie mit zumindest einem Schweißmittel nach einem der vorstehenden Merkmale vorgesehen, das für eine kontinuierliche oder diskontinuierliche Prägeverschweißung an der Kunststofffolie längs oder quer zu einer Förderrichtung der Kunststofffolie ausgebildet ist. Mit einer derartigen Verschweißeinrichtung kann eine aus Kunststofffolie hergestellte Verpackung mit zumindest einer als Originalitätsverschluss ausgeführten Schweißnaht versehen werden. Vorzugsweise werden alle Schweißnähte an der Verpackung mit einer Prägung versehen, so dass jede Auftrennung einer Schweißnaht zu einer Beschädigung der jeweiligen Prägung führt und ein vollständiger Originalitätsschutz gewährleistet ist.

Gemäß einem weiteren Aspekt der Erfindung ist ein Verfahren zur Herstellung einer Folienverpackung, insbesondere mit einer Verschweißeinrichtung nach einem der vorstehenden Merkmale, mit den folgenden Schritten vorgesehen:
- Förderung einer oberen und einer unteren Folienlage mit einer Fördereinrichtung in einer gemeinsamen Förderrichtung,
- Verschweißen der Folienlagen an zumindest einer Schweißnaht mit einem Schweißmittel, das mit einem Dekor versehen ist, um Prägungen und/oder Reliefs in der Schweißnaht zu erzeugen.

Die obere und die untere Folienlage können jeweils endseitige Stirnbereiche einer einzigen, gewölbt an der Verschweißeinrichtung angeordneten Folienbahn sein, die auch als Halbschlauch bezeichnet wird. Sie können jedoch auch jeweils Stirnbereiche zweier an sich getrennter, parallel zueinander ausgerichteter Folien sein. Die beiden Folienlagen werden vorzugsweise zunächst mit einer Schweißnaht parallel zur Förderrichtung, also mit einer Längsschweißung, miteinander verbunden, wodurch ein Folienschlauch bzw. Halbschlauch gebildet werden kann. Wenn zwei separate Folienlagen miteinander verbunden werden, entsteht dadurch zunächst ein einseitig offener Folienschlauch, der in einem nachfolgenden Längsschweißschritt zu einem geschlossenen Folienschlauch verschweißt werden muss. Werden endseitige Stirnbereiche einer einzigen Folienbahn miteinander verbunden werden, entsteht ein geschlossener Folienschlauch. Bei der Längsschweißung sind die in der Folienverpackung zu verpackenden Gegenstände typischerweise derart zwischen den Folienlagen aufgenommen, dass sie von dem beim Schweißvorgang erstellten Folienschlauch umgeben werden.

In einem weiteren Schweißvorgang, einer Querschweißung, die zumindest im Wesentlichen orthogonal zur Förderrichtung und typischerweise diskontinuierlich ausgeführt wird, werden von dem Folienschlauch einzelne Folienbeutel abgetrennt, die nunmehr die Gegenstände allseitig umschließen. Bei der Durchführung des Verfahrens ist vorgesehen, dass die Längsnaht und/oder die Quernaht mit einem Schweißmittel hergestellt werden, das ein Dekor aufweist. Vorzugsweise sind alle Schweißnähte mit Prägungen in der Art eines Originalitätsverschlusses hergestellt.

Bei einer bevorzugten Ausführungsform der Erfindung werden die Folienlagen mit einem scheibenförmigen, mit einem Dekor versehenen Schweißmittel an der Längsnaht verschweißt. Bei einer besonders bevorzugten Ausführungsform der Erfindung wird ein der Schweißnaht benachbarter Randbereich der Folienlagen mittels einer am scheibenförmigen Schweißmittel vorgesehenen, umlaufenden Schneidkante während der Durchführung des Schweißvorgangs kontinuierlich abgetrennt.

Dadurch kann in einem Arbeitsgang eine Verbindung der Folienlagen und eine Beschneidung der erstellten Schweißnaht verwirklicht werden.

In weiterer Ausgestaltung der Erfindung ist vorgesehen, dass die Folienlagen mit einem quer zur Förderrichtung angeordneten, balkenförmigen Schweißmittel verschweißt werden, das vorzugsweise mit einem Dekor versehen ist, um Prägungen und/oder Reliefs in der Querschweißnaht zu erzeugen und das insbesondere benachbarte Folienbereiche mit einer Schneidkante voneinander trennt. Damit kann mit einem weiteren Arbeitsgang sowohl eine Verschweißung der Stirnseiten des bereits gebildeten, jedoch bis dahin noch offenen Folienschlauchs bewirkt werden, als auch eine Trennung des Folienschlauchs in einzelne Folienbeutel. Dabei ist vorzugsweise vorgesehen, dass die Quernähte an den Folienbeuteln mit einer geprägten Schweißnaht versehen sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigt:
- Fig. 1: eine perspektivische Darstellung von Verschweißeinrichtungen für eine Verpackungsmaschine bei Verschweißung eines Folienschlauchs mit Schweißmittel mit Dekor,
- Fig. 2: eine Vorderansicht eines balkenförmigen Schweißmittels mit einem reliefartigen, erhabenen Dekor für Einprägungen in der Schweißnaht und mit einer mittig angeordneten Schneidkante,
- Fig. 3: eine Seitenansicht des balkenförmigen Schweißmittels gemäß der Fig. 3,
- Fig. 4: eine Vorderansicht eines zylindrischen Schweißmittels mit einem vertieft ausgeführten Dekor für ein zumindest abschnittsweise erhabenes Relief an der Schweißnaht und
- Fig. 5: eine Seitenansicht des zylindrischen Schweißmittels gemäß der Fig. 4.

### Detaillierte Beschreibung der Ausführungsbeispiele

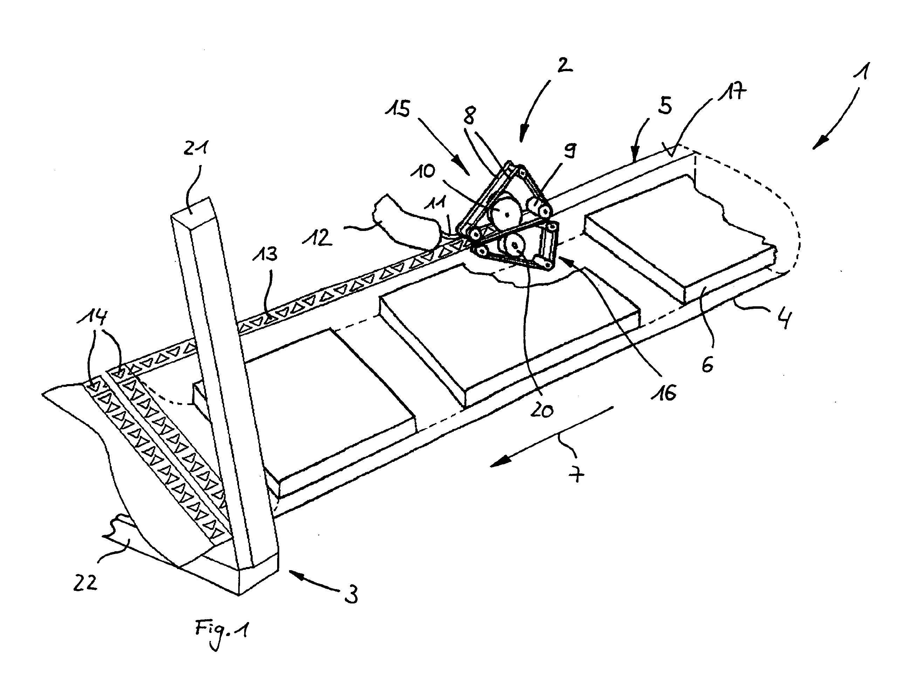

In der Fig. 1 ist eine Verpackungsmaschine 1 schematisch vereinfacht dargestellt. Ein wesentlicher Bestandteil der Verpackungsmaschine 1 sind die Verschweißeinrichtungen 2, 3, die zur Verarbeitung der Folienbahn 4 eingesetzt werden. Die Verschweißeinrichtungen 2, 3 wirken zur Verarbeitung der Folienbahn 4 in bekannter Weise zusammen, wie dies im Detail in der DE 199 05 888 A1 dargestellt ist, die hiermit durch ausdrückliche Bezugnahme zum Gegenstand der Anmeldung gemacht wird. Die Verschweißeinrichtung 2 ist für die Erzeugung einer Längsschweißnaht 13 vorgesehen, die sich parallel zu einer Transportrichtung 7 für die Folienbahn 4 erstreckt. Die Verschweißeinrichtung 3 ist für eine Querschweißnaht 14 vorgesehen, die sich im Wesentlichen orthogonal zur Transportrichtung 7 erstreckt.

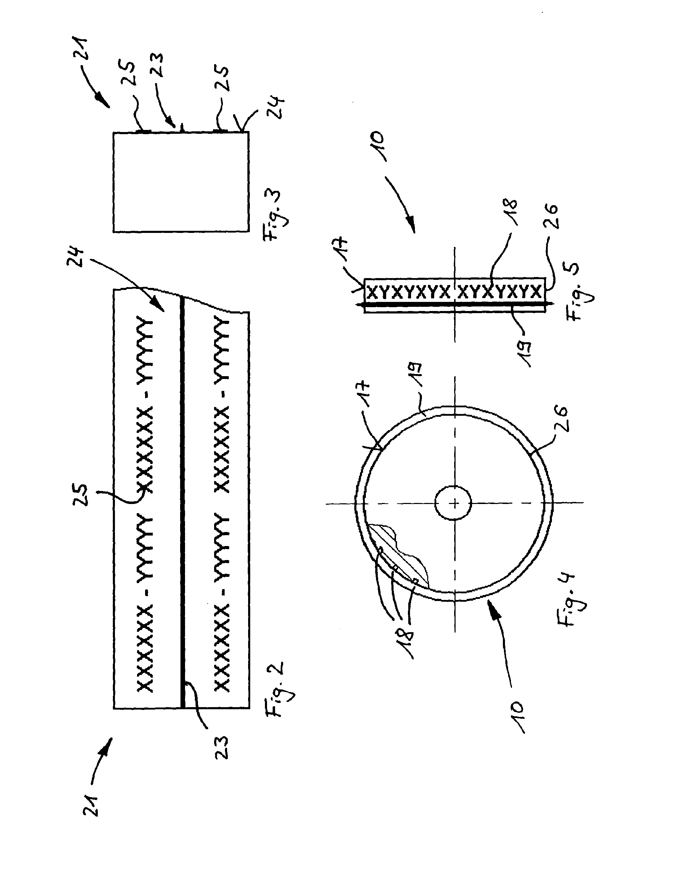

Die Verschweißeinrichtung 2 umfasst zwei gleichartig aufgebaute Fördereinrichtungen 15, 16, die dreiecksförmig angeordnete, von nicht dargestellten Antriebsmitteln angetriebene Umlenkrollen 9 und um die Umlenkrollen 9 herumgeführte Förderriemen 8 aufweisen. Die Fördereinrichtungen 16, 15 stellen eine exakte Förderung der Folienbahn 4, insbesondere zweier aufeinanderliegender Stirnseiten 5 der Folienbahn 4, sicher. Die Fördereinrichtungen 15, 16 unterstützen somit ein nicht dargestelltes, als Vakuumlochband ausgeführtes Förderband der als Saugband-Maschine ausgeführten Verpackungsmaschine, das zur Förderung der Folienbahn 4 sowie der Gegenstände 6 vorgesehen ist. Die Fördereinrichtungen 15, 16 sind spiegelbildlich zueinander angeordnet, wobei eine Symmetrieebene identisch mit einer Schweißebene 17 ist. Die Schweißebene 17 wird von den jeweils den Fördereinrichtungen 15, 16 zugeordneten Schweißrädern 10, 20 bestimmt. Das in der oberen Fördereinrichtung 15 aufgenommene Trennschweißrad 10, das in den Fig. 4 und 5 in ähnlicher Form, jedoch mit abweichendem Dekor dargestellt ist, weist eine nicht dargestellte Beheizungseinrichtung sowie eine Antriebseinrichtung auf und ist mit einem Dekor 18 sowie mit einer umlaufenden Schneidkante 19 versehen. Das in der unteren Fördereinrichtung 16 aufgenommene Gegenrad 20 dient zur Abstützung des vom Trennschweißrad 10 auf die Stirnseiten 5 ausgeübten Anpressdrucks und kann angetrieben oder passiv mitlaufend ausgeführt sein.

Bei der Förderung der Folienbahn 4 in Transportrichtung 7 passieren die bündig aufeinanderliegenden Stirnseiten 5 der Folienbahn 4 zunächst die Verschweißeinrichtung 2. Mit Hilfe der Verschweißeinrichtung 2 werden die Stirnseiten 5 in einem kontinuierlichen Schweißvorgang durch lokale Erhitzung der Folienbahn 4 auf ca. 160 Grad Celsius bis ca. 240 Grad Celsius stoffschlüssig, vorzugsweise untrennbar, miteinander verbunden. Durch das am Trennschweißrad 10 angebrachte Dekor 18 wird eine reliefartige Prägung der Längsschweißnaht 13 erzeugt und gleichzeitig kann auch eine Abtrennung eines Überstands 11 an der Längsschweißnaht vorgenommen werden. Der Überstand 11 wird unmittelbar von der Schneidkante 19 des Trennschweißrades 10 abgetrennt und kann mit Hilfe der Abführeinrichtung in einen nicht dargestellten Aufnahmebehälter entfernt werden. Mit der Durchführung dieses Schweißvorgangs sind die Gegenstände 6 bereits von der nunmehr schlauchartigen Folienbahn 4 umhüllt.

In einem nachfolgenden Arbeitsschritt werden die in dem fortlaufenden Folienschlauch 4 aufgenommenen Gegenstände 6 in voneinander getrennte Folienbeutel vereinzelt. Dazu wird jeweils quer zur Transportrichtung 7 eine Querschweißnaht 14 mit der Verschweißeinrichtung 3 erzeugt. Die Verschweißeinrichtung 3 weist einen Schweißbalken 21 und eine Schweißauflage 22 auf, die schwenkbeweglich an der Verpackungsmaschine 1 angebracht sind und die mittels entgegengesetzter, aufeinander zu gerichteter Schwenkbewegungen die Folienlagen der Folienbahn 4 miteinander verschweißen können. Dabei wird mittels einer längs des Schweißbalkens 21 erstreckten Schneidkante 23 eine Trennung der Folienbahn 4 vorgenommen, so dass eine Vereinzelung der Gegenstände 6 in separate Folienbeutel verwirklicht ist. Um eine Prägung der Querschweißnaht 14 in der gewünschten Qualität verwirklichen zu können, ist die Verschweißeinrichtung 3 in Transportrichtung 7 linearbeweglich angebracht, um während des Schweißvorgangs entsprechend der Transportbewegung der Folienbahn 4 mitgeführt werden zu können. Anschließend wird die Verschweißeinrichtung 3 ohne einen Kontakt mit der Folienbahn 4 entgegen der Transportrichtung 7 wieder in eine Ausgangsstellung für den nächsten Verschweißvorgang gebracht. Es handelt sich demnach bei der Querverschweißung der Folienbahn 4 um einen diskontinuierlichen Schweißvorgang.

Wie in den Fig. 2 bis 5 näher dargestellt, weisen das Trennschweißrad 10 und der Schweißbalken 21 jeweils einen vorzugsweise aus Metall, insbesondere aus Stahl hergestellten Grundkörper auf, der im Falle des Trennschweißrades 10 scheibenförmig ist und beim Schweißbalken 21 balkenförmig gestaltet ist. Der Grundkörper ist mit einer PTFE-Beschichtung versehen, die mit einer Schichtstärke von ca. 0.2mm aufgebracht ist.

Der Schweißbalken 21 weist einen im Wesentlichen rechteckigen Querschnitt auf und ist an einer in Fig. 2 näher dargestellten, als Schweißfläche 24 ausgeführten Stirnfläche mit einem beispielhaft als Beschriftung ausgeführten Dekor 25 versehen, das erhaben reliefartig von der Schweißfläche 24 absteht oder abragt. Damit dringt das Dekor 25 beim Schweißvorgang tiefer in die Folienbahn 4 ein als die übrige Schweißfläche 24 des Schweißbalkens 21, so dass lokale Vertiefungen in die Querschweißnaht 13 eingebracht werden. Das Dekor 25 ist jeweils benachbart von der Schneidkante 23 angebracht, die mittig an der Schweißfläche 24 vorgesehen ist und die, wie in Fig. 3 ersichtlich, über das Dekor 25 hinaus ragt und somit eine zuverlässige Trennung der Folienbahn 4 ermöglicht, um separate Folienbeutel zu erzeugen.

Das Trennschweißrad 10 ist in den Fig. 4 und 5 näher dargestellt und ist an der umlaufenden Stirnseite 26 mit einem umlaufenden Dekor 18 sowie mit einer benachbart zum Dekor 18 vorgesehenen, ebenfalls umlaufenden Schneidkante 19 versehen. Das Trennschweißrad 10 wird derart in der Verschweißeinrichtung 2 angeordnet, dass die Schneidkante 19 in einer von der Folienbahn 4 und den darin aufgenommenen Gegenständen 6 entfernten Stellung angeordnet ist und somit die Beschneidung eines Randbereichs der Längsschweißnaht 13 ermöglicht. Das Dekor 18 ist als Gravur, also als Vertiefung in die Stirnfläche 26 des Trennschweißrads 10 eingebracht, wie in dem freigeschnitten dargestellten Bereich der Fig. 4 ersichtlich ist. Damit wird die Folienbahn 4 beim Schweißvorgang in den vertieft ausgeführten Bereichen des Trennschweißrades 10 nicht mit der ansonsten vom Trennschweißrad 10 auf die Folienbahn 4 übertragenen Anpresskraft beaufschlagt und somit auch lokal nicht verschweißt. Vielmehr ist die Schweißnaht in diesen Bereichen reliefartig gegenüber der Schweißebene 17, die von der ansonsten im Wesentlichen glatten Stirnfläche 26 des Trennschweißrades 10 bestimmt wird, erhöht.

Selbstverständlich kann das Dekor 18, 25 am Trennschweißrad 10 bzw. am Schweißbalken 21 auch bereichsweise vertieft und in anderen Bereichen erhaben ausgeführt sein. Eine Ausführung des Trennschweißrades 10 ausschließlich mit einem erhabenen Dekor 18 und eine Ausführung des Schweißbalkens 21 ausschließlich mit einem vertieften Dekor 25 ist ebenfalls denkbar.

Bei einer nicht dargestellten Ausführungsform der Erfindung ist ein Trennschweißrad ohne Dekor und ein auf der Längsschweißnaht abwälzendes, beheiztes und in Förderrichtung hinter dem Trennschweißrad angeordnetes Dekorrad vorgesehen, um eine der Schweißung nachgelagerte Prägung der Schweißnaht vornehmen zu können. Ein vom Schweißbalken separates Dekorrad oder ein separater Dekorbalken kann auch für eine Querschweißung vorgesehen sein.

## Patentansprüche

1. Schweißmittel (10, 21) für eine Verschweißeinrichtung (2, 3) einer Verpackungsmaschine (1), mit einem Grundkörper, der an einer Stirnfläche (24, 26) für eine Erzeugung einer Schweißnaht (13, 14) oder Schweißprägung an einer Kunststofffolie (4) ausgebildet ist, **dadurch gekennzeichnet, dass** an der Stirnfläche (24, 26), insbesondere abschnittsweise, ein Dekor (18, 25) vorgesehen ist, das für eine dreidimensionale Strukturierung der Schweißnaht (13, 14) in der Art einer Prägung ausgebildet ist.

2. Schweißmittel nach Anspruch 1, **dadurch gekennzeichnet, dass** das Dekor (18, 25) zumindest abschnittsweise von der Stirnfläche (24, 26) überstehend erhaben ausgeführt ist, so dass eine zumindest abschnittsweise vertiefte Prägung der Schweißnaht (13, 14) gewährleistet ist.

3. Schweißmittel nach Anspruch 1 oder 2, **dadurch gekennzeichnet, dass** das Dekor (18, 25) zumindest abschnittsweise vertieft in die Stirnfläche (24, 26) eingebracht ist, so dass ein zumindest abschnittsweise erhabenes Relief an der Schweißnaht (13, 14) gewährleistet ist.

4. Schweißmittel nach einem der vorhergehenden Ansprüche, **dadurch gekennzeichnet, dass** benachbart zum Dekor (18, 25) zumindest eine erhaben ausgeführte Schneidkante (19, 23) vorgesehen ist, die vorzugsweise über das Dekor (18, 25) übersteht.

5. Schweißmittel nach Anspruch 4, **dadurch gekennzeichnet, dass** beidseitig benachbart zur Schneidkante (19,23) ein Dekor (18, 25) angeordnet ist.

6. Schweißmittel nach einem der vorhergehenden Ansprüche, **dadurch gekennzeichnet, dass** der Grundkörper balkenförmig gestaltet ist.

7. Schweißmittel nach einem der Ansprüche 1 bis 5, **dadurch gekennzeichnet, dass** der Grundkörper im Wesentlichen scheibenförmig gestaltet ist.

8. Verschweißeinrichtung (2, 3) für eine Verpackungsmaschine (1) mit zumindest einer Fördereinrichtung (15, 16) für eine Kunststofffolie (4) sowie mit zumindest einem Schweißmittel (10, 21) nach einem der vorhergehenden Ansprüche, das für eine kontinuierliche oder diskontinuierliche Prägeverschweißung an der Kunststofffolie (4) längs oder quer zu einer Förderrichtung (7) der Kunststofffolie (4) ausgebildet ist.

9. Verfahren zur Herstellung einer Folienverpackung, insbesondere mit einer Verschweißeinrichtung nach Anspruch 8, mit den Schritten:
- Förderung einer oberen und einer unteren Folienlage (4) mit einer Förderereinrichtung (15, 16) in einer gemeinsamen Förderrichtung (7),
- Verschweißen der Folienlagen (4) an zumindest einer Schweißnaht (13, 14) mit einem Schweißmittel (10, 21), das mit einem Dekor (18, 25) versehen ist, um Prägungen und/oder Reliefs in der Schweißnaht (13, 14) zu erzeugen.

10. Verfahren nach Anspruch 9, **dadurch gekennzeichnet, dass** die Folienlagen (4) an zumindest einer Seitennaht (13) mit einem parallel zu einer Förderrichtung (7) der Folienlagen (4) angeordneten Schweißmittel (10, 21), das insbesondere mit einem Dekor (18, 25) versehen ist, verschweißt werden.

11. Verfahren nach Anspruch 9 oder 10, **dadurch gekennzeichnet, dass** im Bereich der Schweißnaht (13, 14) benachbarte Bereiche der Folienlagen (4) mittels einer am Schweißmittel (10, 21) vorgesehenen, umlaufenden Schneidkante (19) während der Durchführung des Schweißvorgangs kontinuierlich voneinander getrennt werden.

12. Verfahren nach Anspruch 9 oder 10, **dadurch gekennzeichnet, dass** die Folienlagen (4) mit einem quer zur Förderrichtung (7) angeordneten, balkenförmigen Schweißmittel (21) verschweißt werden, das vorzugsweise mit einem Dekor (25) versehen ist, um Prägungen und/oder Reliefs in der Querschweißnaht (14) zu erzeugen und das insbesondere benachbarte Folienbereiche mit einer Schneidkante (23) voneinander trennt.
